# EUROPÄISCHE PATENTSCHRIFT

(11) **EP 3 360 742 B1**
(45) Veröffentlichungstag und Bekanntmachung des Hinweises auf die Patenterteilung: **05.08.2020**
(21) Anmeldenummer: 18153118.7
(22) Anmeldetag: 24.01.2018
(51) Int. Cl.: B60W 10/113, B60K 6/547, B60K 6/52, B60K 6/387, F16H 3/00, F16H 3/093, B60K 6/48

(54) **HYBRIDANTRIEBSSTRANG FÜR EIN KRAFTFAHRZEUG**
HYBRID DRIVETRAIN FOR A MOTOR VEHICLE
CHAÎNE CINÉMATIQUE HYBRIDE POUR UN VÉHICULE AUTOMOBILE

(30) Priorität: 14.02.2017 DE 102017102943
(43) Veröffentlichungstag der Anmeldung: 15.08.2018
(73) Patentinhaber: Magna PT B.V. & Co. KG, 74199 Untergruppenbach (DE)
(72) Erfinder: Schaller, Martin, 64732 Bad Koenig (DE); Kazmaier, Stefanie, 71720 Oberstenfeld (DE)
(74) Vertreter: Rausch, Gabriele

(56) Entgegenhaltungen:
- EP-A1- 1 714 816
- EP-A2- 1 122 116
- EP-A2- 1 936 234
- WO-A1-2016/112649
- DE-A1-102005 049 992
- DE-A1-102011 088 374
- DE-A1-102013 108 455
- JP-A- 2004 332 840

## Beschreibung

Die vorliegende Erfindung betrifft einen Hybridantriebsstrang nach dem Oberbegriff des Anspruchs 1 für ein Kraftfahrzeug, mit einer Doppelkupplungsanordnung, die ein Eingangsglied aufweist, das mit einem Verbrennungsmotor verwendbar ist, und das ein erstes Ausgangsglied und ein zweites Ausgangsglied aufweist, mit einer Getriebeanordnung, die eine erste Eingangswelle und eine zweite Eingangswelle aufweist, wobei die erste Eingangswelle mit dem ersten Ausgangsglied verbunden ist und wobei die zweite Eingangsglied mit dem zweiten Ausgangsglied verbunden ist, und die eine Ausgangswellenanordnung aufweist, wobei die Getriebeanordnung eine Mehrzahl von Radsätzen aufweist, die zur Einrichtung von Gangstufen dienen und jeweils eine Eingangswelle mit der Ausgangswellenanordnung verbinden.

Auf dem Gebiet der Kraftfahrzeugtechnik besteht seit einigen Jahren ein Trend hin zu Hybridfahrzeugen, bei denen Antriebsleistung mittels eines Verbrennungsmotors und mittels einer elektrischen Maschine bereitgestellt werden kann. Hierbei wird generell unterschieden zwischen sogenannten Mild-Hybridanwendungen, bei denen die elektrische Maschine lediglich kurzzeitig (maximal etwa fünf bis zehn Kilometer) als alleinige Antriebsquelle verwendbar ist bzw. überwiegend als Boost-Antrieb eingesetzt wird. In sogenannten Range-Extender-Antriebssträngen dient eine elektrische Maschine hingegen als Haupt-Antriebsmotor, und ein Verbrennungsmotor wird lediglich "zur Reserve" mitgeführt und/oder um während einer rein elektrischen Fahrt eine Batterie über eine zweite elektrische Maschine (Generator) zu laden.

Hinsichtlich des Layouts von solchen Antriebsträngen besteht entweder die Möglichkeit, den Verbrennungsmotor und die elektrische Antriebsmaschine in Leistungsflussrichtung vor einer Kupplungsanordnung anzuordnen. Dieses Layout ist konstruktiv vergleichsweise einfach realisierbar, hat jedoch Einschränkungen hinsichtlich der Funktionalität. In derartigen Hybridantriebssträngen wird als Getriebeanordnung häufig eine Planetengetriebeanordnung, ggf. in Verbindung mit einem stufenlosen Getriebe, verwendet.

Besonders vorteilhaft ist jedoch die Integration eines Doppelkupplungsgetriebes in einen Hybridantriebsstrang, insbesondere dann, wenn die elektrische Maschine mit dem Eingang von einem der Teilgetriebe verbunden ist.

Ein beispielhaftes Layout dieser Art ist offenbart in dem Dokument DE 10 2010 044 618 B4. Dieses Layout ermöglicht die Realisierung eines Hybridantriebsstranges, bei dem die elektrische Maschine als alleinige Antriebsquelle (über das zugeordnete Teilgetriebe) dienen kann, bei dem der Verbrennungsmotor im Stand mittels der elektrischen Maschine startbar ist, bei dem eine Rekuperation in allen Betriebsmodi möglich ist, bei dem ein Boost-Betrieb möglich ist, etc.

Die Getriebeanordnung eines solchen Hybridantriebsstranges beinhaltet in der Regel eine Mehrzahl von Gangstufen, wobei die Anzahl der zur Verfügung gestellten Vorwärtsgangstufen tendenziell steigt, sodass automatisierte Doppelkupplungsgetriebe sechs, sieben, acht oder mehr Gangstufen haben können.

Aufgrund ihrer Leistungscharakteristik benötigen elektrische Maschinen bei einem rein elektrischen Fahrbetrieb in der Regel weniger Gangstufen als ein Verbrennungsmotor.

Hybridantriebsstränge, die dazu ausgebildet sind, für eine elektrische Maschine eine oder zwei Gangstufen bereitzustellen und für einen Verbrennungsmotor drei oder vier Gangstufen bereitzustellen, sind beispielsweise bekannt aus den Dokumenten DE 10 2013 022 142 A1 oder DE 10 2010 063 092 A1.

Ein weiterer Hybridantriebsstrang ist bekannt aus dem Dokument DE 10 2013 206 176 A1, wobei der Verbrennungsmotor und die elektrische Maschine auf eine Welle eines Getriebes einspeisen.

Das Dokument EP 1 526 304 B1 betrifft ein Doppelkupplungsgetriebe, das keine spezielle Anpassung an eine Hybridanwendung zeigt. Hierbei sind auf einer ersten Getriebeeingangswelle Zahnräder für gerade Gangstufen angeordnet und auf einer zweiten Getriebeeingangswelle Zahnräder für ungerade Gangstufen. Eine Synchronisierungseinheit ist zur wahlweisen drehfesten Verbindung eines Zahnrades für eine gerade Gangstufe sowie eines Zahnrades für eine ungerade Gangstufe vorgesehen. Höher belastete Gänge, wie erster Gang, zweiter Gang und Rückwärtsgang, sind unmittelbar neben Lagerebenen angeordnet.

Das Dokument WO 2015/197927 A1 offenbart einen Hybridantriebsstrang, bei dem ein Verbrennungsmotor und eine elektrische Maschine an axial entgegengesetzten Enden der Getriebeanordnung angeordnet sind.

Ferner ist es bekannt, bei Doppelkupplungsgetrieben eine Brückenkupplungsanordnung vorzusehen, um die Anzahl der Gangstufen durch Einrichtung sogenannter Windungs-Gangstufen zu erhöhen.

Aus der DE 10 2011 088 374 A1 ist ein Kraftfahrzeuggetriebe mit zwei Teilgetrieben bekannt, die über koaxial zueinander angeordnete Eingangswellen verfügen und jeweils abwechselnd durch Verbinden der je zugeordneten Eingangswelle mit einer Antriebsseite in einen Kraftfluss zu mindestens einer Abtriebsseite einbindbar sind. Hierbei sind parallel zu den Eingangswellen zwei Vorgelege vorgesehen, wobei eine Drehbewegung der Antriebsseite mit einem von mehreren diskreten und entsprechend einer Gangfolge wechselweise auf die beiden Teilgetriebe aufgeteilten Gänge übersetzt auf die mindestens eine Abtriebsseite übertragen werden kann. Die Gänge sind dabei jeweils durch Betätigung mindestens eines je zugehörigen Schaltelements und einem damit verbundenen Führen des Kraftflusses über eines der Vorgelege und über zumindest einen Radsatz darstellbar, wobei dabei ein Wechsel zwischen den Teilgetrieben unter Last vollzogen wird.

Aus der EP 1 714 816 A1 ist ein Schaltgetriebe bekannt, wobei die Getriebeeinheit wenigstens ein Losrad mit zugeordneter Gangschaltkupplung umfasst und dass durch die Getriebeeinheit ein weiterer Vorwärtsgang realisierbar ist. Dadurch kann die Anzahl der auf der Eingangswelle sitzenden Zahnräder für die verschiedenen Vorwärtsgänge reduziert werden. Dies eröffnet die Möglichkeit, die Eingangswelle kürzer auszuführen, wodurch im Allgemeinen die axiale Baulänge des Schaltgetriebes verkleinert werden kann.

Vor diesem Hintergrund ist es eine Aufgabe der Erfindung, einen verbesserten Hybridantriebsstrang anzugeben.

Diese Aufgabe wird zum einen gelöst durch einen Hybridantriebsstrang der eingangs genannten Art, wobei die Getriebeanordnung ferner eine Brückenkupplungsanordnung mit einer Brückenkupplungswelle und mit einer Brücken-Schaltkupplung aufweist, mittels der die erste Eingangswelle und die zweite Eingangswelle miteinander koppelbar sind, und wobei an der Brückenkupplungswelle ein Brücken-Losrad drehbar gelagert ist, das mit einem Radsatz zur Einrichtung einer Direkt-Gangstufe in Eingriff steht und/oder das mit einem Antriebsritzel einer elektrischen Maschine drehkoppelbar ist, wobei das Brücken-Losrad mittels der Brücken-Schaltkupplung mit der Brückenkupplungswelle verbindbar ist, wobei das Brücken-Losrad vorzugsweise in einer Radsatzebene mit dem Antriebsritzel der elektrischen Maschine angeordnet ist und/oder in einer Radsatzebene mit dem ersten Radsatz angeordnet ist.

Bei dem erfindungsgemäßen Antriebsstrang ist es bevorzugt, wenn eine elektrische Maschine an eine der Eingangswellen angebunden ist, vorzugweise an die erste Eingangswelle.

Unter einer Direkt-Gangstufe wird vorliegend verstanden, dass ein Leistungsfluss ausschließlich von einer Eingangswelle zu einer Ausgangswelle einer Ausgangswellenanordnung fließt, also derart, dass zur Einrichtung der zugeordneten Direkt-Gangstufe nur eine einzelne Schaltkupplung zu betätigen ist.

Generell ermöglicht der Hybridantriebsstrang aufgrund der Doppelkupplungsanordnung und der Tatsache, dass die Eingangswellen über unterschiedliche Radsätze mit der Ausgangswellenanordnung verbindbar sind, eine Getriebebetätigung nach der Art eines Doppelkupplungsgetriebes, zumindest für einige Gangstufen. Hierbei ist der ersten Eingangswelle wenigstens eine ungerade oder eine gerade Gangstufe zugeordnet, wohingegen der zweiten Eingangswelle wenigstens eine gerade bzw. eine ungerade Gangstufe zugeordnet ist. Während Antriebsleistung über eine der Gangstufen übertragen wird, kann bei geöffneter Kupplung der Doppelkupplungsanordnung in dem anderen Teilgetriebe die andere Gangstufe bereits geschaltet werden. Ein Gangwechsel kann dann zugkraftunterbrechungsfrei erfolgen, indem die zwei Reibkupplungen der Doppelkupplungsanordnung überschneidend betätigt werden.

Durch die Maßnahme, dass das Schaltkupplungspaket alternativ die erste Direkt-Gangstufe oder die zweite Direkt-Gangstufe schalten kann, kann eine axial kompakte Bauweise realisiert werden. Insbesondere kann durch diese Bauweise ggf. ein Schaltkupplungspaket (eine Synchron-Einheit) eingespart werden. Dies gilt insbesondere dann, wenn die Getriebeanordnung zur Einrichtung von genau drei oder genau vier Vorwärtsgangstufen ausgebildet ist.

Der erfindungsgemäße Hybridantriebsstrang ermöglicht aufgrund der Anbindbarkeit einer elektrischen Maschine an die erste Eingangswelle (oder an die zweite Eingangswelle), dass der Hybridantriebsstrang ferner alle relevanten Hybrid-Funktionen erfüllen kann, wie ein Standladen, ein Boosten, ein Rekuperieren, ein Verbrennungsmotorstart mittels der elektrischen Maschine, etc.

Die Getriebeanordnung des erfindungsgemäßen Hybrid-Antriebsstranges ist insbesondere dazu ausgelegt, eine Anbindung einer elektrischen Maschine so zu realisieren, dass für die elektrische Maschine genau zwei unterschiedliche Vorwärtsgangstufen zur Verfügung stehen, die in einer Variante unter Last geschaltet werden können, vorzugsweise jedoch nicht unter Last geschaltet werden können. Ferner ist die Getriebeanordnung vorzugsweise dafür ausgelegt, für einen verbrennungsmotorischen Betrieb wenigstens drei, vorzugsweise vier Vorwärtsgangstufen bereitzustellen, von denen zumindest ein Gangwechsel von Vorwärtsgangstufe 1 nach Vorwärtsgangstufe 2 unter Last erfolgen kann, mithin zugkraftunterbrechungsfrei.

Gemäß einer bevorzugten Ausführungsform sind dabei die erste Direkt-Gangstufe und die zweite Direkt-Gangstufe, die mittels eines Schaltkupplungspaketes alternativ schaltbar sind, benachbarte Vorwärtsgangstufen.

Die benachbarten Vorwärtsgangstufen können insbesondere die Vorwärtsgangstufen 2 und 3 sein. Dadurch, dass das Schaltkupplungspaket nur eine alternative Schaltbarkeit der zwei Direkt-Gangstufen ermöglicht, ist in diesem Fall eine Lastschaltfähigkeit bzw. zugkraftunterbrechungsfreie Schaltung zwischen den Gangstufen 2 und 3 nicht gegeben. Da mit dieser Ausgestaltung jedoch eine axial besonders kompakte Bauweise realisiert ist, kann dieser Nachteil gegebenenfalls in Kauf genommen werden.

Gemäß einer weiteren bevorzugten Ausführungsform sind der ersten Eingangswelle mindestens eine gerade Vorwärtsgangstufe als auch mindestens eine ungerade Vorwärtsgangstufe zugeordnet, und/oder der zweiten Eingangswelle sind mindestens eine gerade Vorwärtsgangstufe als auch mindestens eine ungerade Vorwärtsgangstufe zugeordnet.

Die Vorwärtsgangstufen, die in dieser Ausführungsform einer Eingangswelle zugeordnet sind, sind dabei vorzugsweise nicht benachbarte Vorwärtsgangstufen, so dass die Lastschaltfähigkeit der Getriebeanordnung durch die Maßnahme vorzugsweise nicht eingeschränkt wird.

Die Zuordnung von sowohl einer geraden als auch einer ungeraden Vorwärtsgangstufe zu einer Eingangswelle, d.h. zu einem Teilgetriebe der Getriebeanordnung, ermöglicht eine größere Flexibilität bei der Anordnung der einzelnen Radsätze in der Getriebeanordnung.

Von besonderem Vorzug ist es, wenn eine Vorwärtsgangstufe 2 der ersten oder der zweiten Eingangswelle zugeordnet ist, wobei eine Vorwärtsgangstufe 4 der anderen Eingangswelle zugeordnet ist.

Die geraden Vorwärtsgangstufen 2 und 4 sind bei dieser Ausführungsform folglich auf die zwei Teilgetriebe verteilt.

Insgesamt ist es ferner vorteilhaft, wenn die Getriebeanordnung dazu ausgebildet ist, eine Anzahl von Vorwärtsgangstufen einzurichten, wobei eine Zuordnung der Vorwärtsgangstufen zu der ersten Eingangswelle oder zu der zweiten Eingangswelle und eine Zuordnung von Schaltkupplungen zu diesen Vorwärtsgangstufen so realisiert sind, dass ein Gangwechsel von Vorwärtsgangstufe 1 in Vorwärtsgangstufe 2 und/oder ein Gangwechsel von Vorwärtsgangstufe 2 in Vorwärtsgangstufe 3 unter Last durchführbar sind.

Unter einem Gangwechsel unter Last ist vorliegend insbesondere ein zugkraftunterbrechungsfreier Gangwechsel zu verstehen, bei dem die zwei Reibkupplungen der Doppelkupplungsanordnung überschneidend betätigt werden.

Bei dieser Ausführungsform ist es möglich, dass die Vorwärtsgangstufen 3 und 4 einem Teilgetriebe zugeordnet sind und folglich nicht unter Last geschaltet werden können. Da eine Schaltung mit Zugkraftunterbrechung nur bei Gangwechseln in den unteren Gangstufen einen wesentlichen Komfortnachteil darstellt, ist diese Ausführungsform hinsichtlich des Komforts akzeptabel.

In einer weiteren bevorzugten Ausführungsform sind sämtliche Gangstufen der Getriebeanordnung mittels zweier Schaltkupplungspakete ein- und auslegbar, in die jeweils zwei alternativ betätigbare Schaltkupplungen integriert sind.

Unter einem Schaltkupplungspaket wird vorliegend eine Schaltkupplungsanordnung verstanden, die eine oder zwei Schaltkupplungen aufweist, die mittels eines einzelnen Schaltgliedes (z.B. einer Schaltgabel) alternativ betätigbar sind. Ein Schaltkupplungspaket kann eine einzelne Schaltkupplung aufweisen, weist jedoch in vielen Fällen zwei Schaltkupplungen auf, die folglich nur alternativ eingelegt werden können.

Bei dieser Ausgestaltung ist es möglich, wenigstens eine Gangstufe, insbesondere eine Vorwärtsgangstufe als Windungsgangstufe zu realisieren. Von besonderem Vorzug ist es, wenn als Windungsgangstufe die Vorwärtsgangstufe 1 ausgebildet ist. In diesem Fall ist es bevorzugt, wenn ein Leistungsfluss zur Einrichtung der Vorwärtsgangstufe 1 von einer Eingangswelle über die Brückenkupplungsanordnung hin zu der anderen Eingangswelle erfolgt, und zwar zu jener Eingangswelle, die der Vorwärtsgangstufe 2 zugeordnet ist, so dass der Leistungsfluss anschließend hin zu einer Ausgangswellenanordnung über einen Radsatz geführt werden kann, der der Vorwärtsgangstufe 2 zugeordnet ist.

Gemäß der erfindungsgemäßen Ausführungsform erfolgt eine schaltbare Kopplung zwischen der Brückenkupplungswelle und einem Radsatz zur Einrichtung einer Direkt-Gangstufe und folglich eine Verbindung zu einer der Eingangswellen über einen Radsatz, der zugleich dazu dienen kann, eine elektrische Maschine an die Getriebeanordnung anzubinden. Insbesondere kann hierbei eine elektrische Maschine so angeordnet sein, dass sie parallel zu Wellen des Antriebsstranges ausgerichtet ist, derart, dass das Antriebsritzel nach der Art eines Stirnradsatzes mit dem Brücken-Losrad drehgekoppelt werden kann, entweder direkt oder über ein Zwischenzahnrad, das eine Übersetzungsanpassung ermöglicht.

Der Radsatz kann folglich in diesem Fall vorzugsweise drei Aufgaben erfüllen, zum einen das Einrichten einer Direkt-Gangstufe, zum zweiten das Einrichten einer Windungs-Gangstufe unter Verwendung der Brücken-Schaltkupplung und zum dritten eine Ankopplung der elektrischen Maschine an die zugeordnete Eingangswelle. Die zugeordnete Eingangswelle ist vorzugsweise die erste Eingangswelle.

Gemäß einer bevorzugten Ausführungsform ist dabei das Brücken-Losrad in einer Radsatzebene mit dem Antriebsritzel der elektrischen Maschine angeordnet und/oder ist in einer Radsatzebene mit dem ersten Radsatz angeordnet.

Mit anderen Worten ist der Radsatz, der vorzugsweise die drei Funktionen erfüllen kann, vorzugsweise in genau einer Radsatzebene angeordnet und beinhaltet vorzugsweise ein mit der ersten Eingangswelle verbundenes Festrad, ein an der Brückenkupplungswelle drehbar gelagertes Brücken-Losrad, ein an einer zweiten Ausgangswelle drehbar gelagertes weiteres Losrad sowie das Antriebsritzel und ggf. ein Zwischenzahnrad.

Hierdurch kann insgesamt eine Vielzahl von Funktionen in einer Radsatzebene realisiert werden, sodass eine axial kompakte Bauweise möglich ist.

Insgesamt ist es ferner bevorzugt, wenn an der Brückenkupplungswelle ein Brücken-Festrad eines Radsatzes zur Einrichtung einer Direkt-Gangstufe festgelegt ist.

Das eine Brücken-Festrad steht dabei vorzugsweise mit einem Zahnrad in Eingriff, das der zweiten Eingangswelle zugeordnet ist.

Insgesamt ist es ferner vorteilhaft, wenn die Brückenkupplungswelle mittels einer Ausgangs-Schaltkupplung mit einer Ausgangswelle der Ausgangswellenanordnung verbindbar ist.

Bei dieser Ausführungsform kann die Brückenkupplungswelle mit einem daran festgelegten Brücken-Festrad die Funktion eines Losrades für eine Direkt-Gangstufe erfüllen, indem beispielsweise Leistung von einem Festrad der zweiten Eingangswelle hin zu dem Brücken-Festrad fließt, und von dort über die geschlossene Ausgangs-Schaltkupplung zu der Ausgangswelle der Ausgangswellenanordnung.

Die Brückenkupplungswelle ist generell parallel versetzt zu den Eingangswellen angeordnet. Ferner kann die Brückenkupplungswelle auch versetzt zu einer Ausgangswelle oder zu Ausgangswellen der Ausgangswellenanordnung angeordnet sein.

Von besonderem Vorzug ist es jedoch, wenn die Brückenkupplungswelle als Hohlwelle an einer Ausgangswelle der Ausgangswellenanordnung drehbar gelagert ist.

Bei dieser Ausführungsform kann die Ausgangs-Schaltkupplung eine einfache Verbindung zwischen der Brückenkupplungswelle und der Ausgangswelle ermöglichen.

Gemäß einer weiteren bevorzugten Ausführungsform, ist die erste Eingangswelle über einen ersten Radsatz mit der Ausgangswellenanordnung verbunden, um eine erste Direkt-Gangstufe einzurichten, wobei die zweite Eingangswelle über einen zweiten Radsatz mit der Ausgangswellenanordnung verbunden ist, um eine zweite Direkt-Gangstufe einzurichten, und wobei die zweite Eingangswelle über einen dritten Radsatz mit der Ausgangswellenanordnung verbunden ist, um eine dritte Direkt-Gangstufe einzurichten.

Die drei Direkt-Gangstufen sind vorzugsweise jeweils Vorwärtsgangstufen.

Die drei Direkt-Gangstufen sind insbesondere Vorwärtsgangstufen 2, 3 und 4. Eine erste Vorwärtsgangstufe wird vorzugsweise als Windungs-Gangstufe realisiert. Demzufolge ist es bevorzugt, wenn die Getriebeanordnung genau vier Vorwärtsgangstufen für den Betrieb des Verbrennungsmotors bereitstellt, von denen drei Vorwärtsgangstufen als Direkt-Gangstufen ausgebildet sind und von denen eine Vorwärtsgangstufe als Windungs-Gangstufe realisiert ist.

Durch eine Drehkopplung der elektrischen Maschine an ein Brücken-Losrad der Brückenkupplungsanordnung ist es zudem möglich, für die elektrische Maschine wenigstens zwei Vorwärtsgangstufen zu realisieren, zum einen über die Direkt-Gangstufe des Radsatzes, an den die elektrische Maschine angebunden ist. Die zweite Gangstufe kann eingerichtet werden, indem die Brücken-Schaltkupplung geschaltet wird und Antriebsleistung folglich über die andere Eingangswelle (vorzugsweise die zweite Eingangswelle) hin zu einer Ausgangswelle übertragen wird.

Generell lässt sich eine derartige Getriebeanordnung mit wenigen Gangradsatzebenen realisieren, insbesondere mit nur drei Gangradsatzebenen und vorzugsweise mit nur zwei Schaltkupplungspaketebenen, von denen eine vorzugsweise überschneidend mit einer Gangradsatzebene angeordnet ist bzw. axial ausgerichtet mit einer Gangradsatzebene ist. Vorzugsweise kann die Getriebeanordnung folglich mit nur vier Radsatz-/Schaltkupplungsebenen realisiert werden.

Von besonderem Vorzug ist es, wenn der dritte Radsatz ein mit der Ausgangswelle verbundenes Brücken-Festrad aufweist, wobei die Brückenkupplungswelle mittels einer Ausgangs-Schaltkupplung mit der Ausgangswellenanordnung verbindbar ist.

Hierbei kann die Brückenkupplungswelle nicht nur die Funktion der Verbindung der zwei Eingangswellen erfüllen, sondern auch die Funktion eines Losrades einer dritten Direkt-Gangstufe. Insgesamt ist es ferner vorteilhaft, wenn die Ausgangswellenanordnung eine erste Ausgangswelle und eine zweite Ausgangswelle aufweist, die über einen Abtriebsradsatz mit einem Differential verbindbar sind.

Der Begriff der Verbindbarkeit mit einem Differential ist gleichzusetzen mit der Verbindbarkeit mit einem beliebigen Abtriebsglied.

Durch die Ausgestaltung einer Eingangswellenanordnung, die eine erste Eingangswelle und eine vorzugsweise konzentrisch hierzu angeordnete zweite Eingangswelle in Form einer Hohlwelle aufweist, kann die Getriebeanordnung nach der Art eines 3-Wellengetriebes realisiert werden, was ebenfalls zu einer axial kompakten Bauweise beiträgt.

Dabei ist es von besonderem Vorzug, wenn der Abtriebsradsatz in axialer Richtung zwischen der Doppelkupplungsanordnung und einem Getriebeeingang der Getriebeanordnung angeordnet ist.

In diesem Fall können die relativ hohen Drehmomente, die über den Abtriebsradsatz übertragen sind, über eine Lagerebene abgestützt werden, die benachbart zu dem Abtriebsradsatz und vorzugsweise axial zwischen dem Abtriebsradsatz und der Doppelkupplungsanordnung angeordnet ist.

Gemäß einer weiteren bevorzugten Ausführungsform, die in Verbindung mit dem Oberbegriff des Anspruchs 1 eine eigene Erfindung darstellt, ist an der ersten Eingangswelle genau ein Festrad für eine Direkt-Vorwärtsgangstufe festgelegt und/oder sind an der zweiten Eingangswelle genau zwei Festräder von weiteren Direkt-Vorwärtsgangstufen angeordnet.

Auch diese Maßnahme trägt zu einer kompakten Bauweise bei, da der Eingangswellenanordnung vorzugsweise insgesamt nur drei derartige Festräder zugeordnet sind.

Gemäß einer weiteren bevorzugten Ausführungsform sind, von einem Getriebeeingang der Getriebeanordnung aus gesehen, koaxial zu einer ersten Ausgangswelle ein Parksperrenrad, ein Rad für eine Vorwärtsgangstufe, optional ein Rückwärtsgangstufen-Rad, ein Brücken-Losrad und ein Schaltkupplungspaket mit einer Brücken-Schaltkupplung und mit einer Ausgangswellen-Schaltkupplung angeordnet.

Das Parksperrenrad dient dazu, in Verbindung mit einer vorliegend nicht näher beschriebenen Parksperrenanordnung, den Hybridantriebsstrang und ein damit ausgestattetes Kraftfahrzeug bedarfsweise zu immobilisieren. Das Parksperrenrad ist dabei vorzugsweise mit der ersten Ausgangswelle drehfest verbunden. Das Rad für die Vorwärtsgangstufe ist vorzugsweise ein drehfest an der Brückenkupplungswelle festgelegtes Zahnrad. Das Brücken-Losrad ist ein drehbar an der Brückenkupplungswelle gelagertes Zahnrad.

Die Brücken-Schaltkupplung ist unmittelbar benachbart zu dem Brücken-Losrad angeordnet. Die Ausgangs-Schaltkupplung ist vorzugsweise auf einer dem Brücken-Losrad abgewandten axialen Seite des Schaltkupplungspaketes angeordnet.

Der Hybridantriebsstrang kann generell ohne eigenen Rückwärtsgangstufen-Radsatz realisiert werden. In diesem Fall wird ein Rückwärtsfahrbetrieb ausschließlich mittels der elektrischen Maschine eingerichtet, die in beiden Drehrichtungen antreibbar ist.

Optional ist es jedoch möglich, in die Getriebeanordnung einen Rückwärtsgangstufen-Radsatz zu integrieren. Folglich ist optional zwischen dem Rad für die Vorwärtsgangstufe und dem Brücken-Losrad ein Rückwärtsgangstufen-Rad angeordnet.

Gemäß einer weiteren bevorzugten Ausführungsform sind, von einem Getriebeeingang der Getriebeanordnung aus gesehen, koaxial zu einer zweiten Ausgangswelle ein Losrad für eine Vorwärtsgangstufe, ein Schaltkupplungspaket, optional ein Rückwärtsgangstufen-Losrad, ein Losrad für eine weitere Gangstufe und optional ein weiteres Schaltkupplungspaket angeordnet.

Das Losrad für die weitere Gangstufe ist vorzugsweise ein Losrad eines ersten Radsatzes zur Einrichtung einer ersten Direkt-Gangstufe.

Zwischen den Losrädern ist ein Schaltkupplungspaket angeordnet, das entweder beide Losräder bedienen kann, um auf diese Weise eine erste Direkt-Gangstufe und eine zweite Direkt-Gangstufe alternativ mittels eines solchen Schaltkupplungspaketes schalten zu können.

Alternativ hierzu kann ein derartiges Schaltkupplungspaket auch nur eine einzelne Schaltkupplung aufweisen, die dem Losrad zugeordnet ist, das dem Getriebeeingang am nächsten ist.

Das Losrad für die weitere Gangstufe, das von dem Getriebeeingang weiter beabstandet ist, wird in diesem Fall alternativ mittels eines Schaltkupplungspaketes betätigt, das eine einzelne Schaltkupplung beinhaltet, die auf der dem Getriebeeingang abgewandten Seite des weiteres Losrades angeordnet ist. Für diesen Fall können das Losrad und das weitere Losrad unabhängig voneinander mit der Ausgangswelle verbunden werden, sodass ggf. Schaltzeiten verkürzt werden können und/oder zugkraftunterbrechungsfreie Schaltungen ermöglicht werden.

Insgesamt ist es vorteilhaft, wenn an der zweiten Eingangswelle Festräder von zwei unmittelbar benachbarten Vorwärtsgangstufen festgelegt sind.

Hierdurch ist zwar eine Lastschaltbarkeit bzw. Schaltbarkeit ohne Zugkraftunterbrechung für diese zwei Gangstufen nicht gegeben. Bei den Vorwärtsgangstufen, die unmittelbar benachbart sind und die Festrädern der zweiten Eingangswelle zugeordnet sind, handelt es sich dabei vorzugsweise um die höchsten Gangstufen der Getriebeanordnung, insbesondere die Gangstufen 3 und 4.

Eine Zugkraftunterbrechung stellt bei Schaltungen in unteren Gangstufen einen höheren Komfortverlust dar als bei Schaltungen in höheren Gangstufen, sodass die Komforteinbuße bei Nicht-Lastschaltfähigkeit der höchsten Gangstufen relativ gering ist.

Andererseits ermöglicht dieses Layout, die Verzahnungen bzw. Übersetzungen anderer Gangstufen optimieren zu können.

Gemäß einer weiteren insgesamt bevorzugten Ausführungsform sind an einer zweiten Ausgangswelle zwei unterschiedlichen Vorwärtsgangstufen zugeordnete Losräder drehbar gelagert, die mittels eines dazwischen liegenden Schaltkupplungspaketes alternativ mit der zweiten Ausgangswelle verbindbar sind oder die mittels unabhängig voneinander schaltbarer Schaltkupplungen mit der zweiten Ausgangswelle verbindbar sind.

Wie oben beschrieben kann eine Anordnung eines Schaltkupplungspaketes zwischen zwei Losrädern zu einer axial kompakten Bauweise beitragen, insbesondere wenn axial mit einem solchen Schaltkupplungspaket ein der anderen Ausgangswelle zugeordneter Radsatz axial ausgerichtet ist. Bei der unabhängig voneinander realisierten Schaltbarkeit von zwei einzelnen Schaltkupplungen ist es bevorzugt, wenn eine dieser Schaltkupplungen axial mit einem Schaltkupplungspaket ausgerichtet ist, das die Brücken-Schaltkupplung beinhaltet.

Die Doppelkupplungsanordnung kann hydraulisch betätigt werden. Vorzugsweise wird die Doppelkupplung elektromotorisch betätigt.

Die zwei Gangstufen, die für die elektrische Maschine realisierbar sind, sind vorzugsweise nicht lastschaltbar.

Von den Vorwärtsgangstufen, die für den Verbrennungsmotor bereitstehen, ist wenigstens ein Vorwärtsgangstufensprung ebenfalls nicht lastschaltbar realisiert, wobei es sich hierbei vorzugsweise um die höchsten Gangstufen handelt.

Die Getriebeanordnung kann, wie eingangs erwähnt, auch ohne Brückenkupplungsanordnung realisiert werden. In diesem Fall ist es bevorzugt, wenn Vorwärtsgangstufen 1 und 3 einer zweiten Eingangswelle zugeordnet sind und Vorwärtsgangstufen 2 und 4 einer ersten Eingangswelle. Für die Vorwärtsgangstufen 2 und 4 ist vorzugsweise eine Doppelnutzung realisiert, derart, dass ein Festrad an der ersten Eingangswelle mit Losrädern für die Vorwärtsgangstufen 2 und 4 an unterschiedlichen Ausgangswellen der Ausgangswellenanordnung in Eingriff stehen.

Hierbei ist es ferner bevorzugt, wenn ein Schaltkupplungspaket die Vorwärtsgangstufen 1 und 4 alternativ betätigt. Ein zweites Schaltkupplungspaket bevorzugt vorzugsweise alternativ die Vorwärtsgangstufe 2 und 3.

Bei einem derartigen Getriebe können für die elektrische Maschine, die vorzugsweise an den Radsatz angebunden ist, der die Vorwärtsgangstufen 2 und 4 darstellt, zwei Vorwärtsgangstufen zur reinen elektromotorischen Fahrweise genutzt werden. Verbrennungsmotorisch können vier Gangstufen genutzt werden, von denen sämtliche Schaltungen bis auf die Schaltung 2-3 lastschaltfähig sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Figur 1 eine schematische Darstellung einer ersten Ausführungsform eines erfindungsgemäßen Hybridantriebsstranges;
Figur 2 eine alternative Ausführungsform eines erfindungsgemäßen Hybridantriebsstranges;
Figur 3 eine Teilansicht einer weiteren alternativen Ausführungsform eines erfindungsgemäßen Hybridantriebsstranges;
Figur 4 eine weitere schematische Ansicht einer weiteren alternativen Ausführungsform eines erfindungsgemäßen Hybridantriebsstranges;
Figur 5 eine weitere alternative Ausführungsform eines erfindungsgemäßen Hybridantriebsstranges; und
Figur 6 eine Teilansicht einer weiteren alternativen Ausführungsform eines erfindungsgemäßen Hybridantriebstranges.

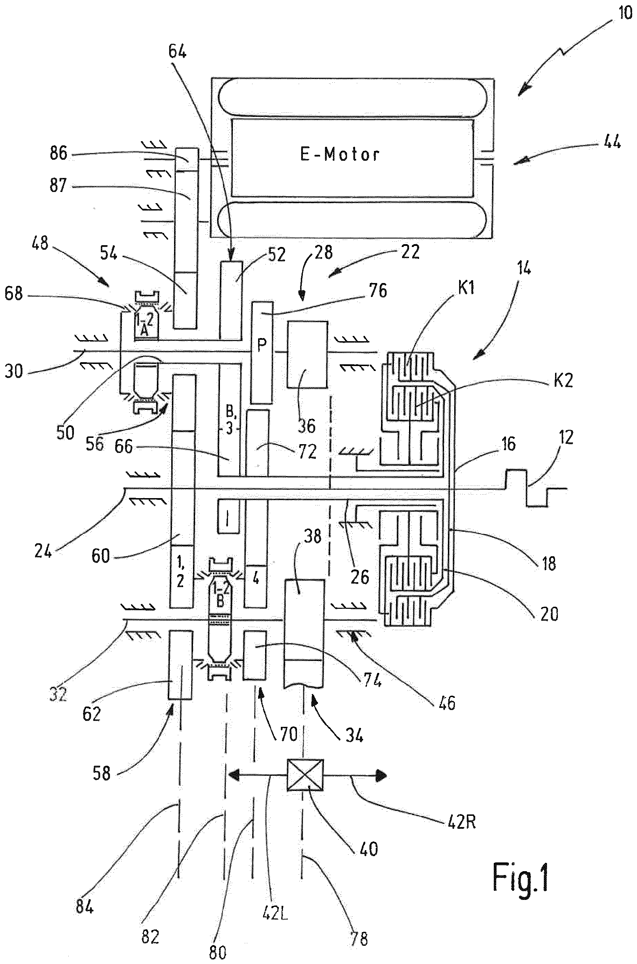

In Fig. 1 ist in schematischer Form ein Antriebsstrang für ein Kraftfahrzeug in Form eines Hybridantriebsstranges dargestellt und generell mit 10 bezeichnet.

Der Antriebsstrang 10 weist einen Verbrennungsmotor 12 auf, der an ein Eingangsglied 16 einer Doppelkupplungsanordnung 14 angeschlossen ist. Die Doppelkupplungsanordnung 14 weist eine erste Reibkupplung K1 und eine zweite Reibkupplung K2 auf, die als trockene Reibkupplungen ausgebildet sein können, jedoch auch als nasslaufende Lamellenkupplungen realisiert sein können. Die Kupplungen K1, K2 werden vorzugsweise elektromotorisch betätigt.

Die erste Reibkupplung K1 weist ein erstes Ausgangsglied 18 auf. Die zweite Kupplung K2 weist ein zweites Ausgangsglied 20 auf.

Der Antriebsstrang 10 beinhaltet ferner eine Getriebeanordnung 22 mit einer Eingangswellenanordnung, die eine erste innere Eingangswelle 24 aufweist, die mit dem ersten Ausgangsglied 18 verbunden ist. Ferner beinhaltet die Eingangswellenanordnung eine zweite Eingangswelle 26, die als Hohlwelle um die erste Eingangswelle 24 herum angeordnet ist und die mit dem zweiten Ausgangsglied 20 verbunden ist.

Die erste Eingangswelle 24 ist axial länger als die zweite Eingangswelle 26 und erstreckt sich aus der zweiten Eingangswelle 26 heraus.

Die Getriebeanordnung 22 beinhaltet ferner eine Ausgangswellenanordnung 28, die eine erste Ausgangswelle 30 und eine zweite Ausgangswelle 32 aufweist. Die Ausgangswellen 30, 32 sind parallel versetzt zu der Eingangswellenanordnung 24, 26 angeordnet. Die Ausgangswellen 30, 32 sind über einen Abtriebsradsatz 34 miteinander gekoppelt, der ein erstes Abtriebsrad 36 aufweist, das an der ersten Ausgangswelle 30 festgelegt ist, und ein zweites Abtriebsrad 38 aufweist, das an der zweiten Ausgangswelle 32 festgelegt ist. Der Abtriebsradsatz 34 dient zum Antrieb eines Differenzials 40 oder eines anderen Leistungsverteilungselementes, mittels dessen Antriebsleistung auf angetriebene Räder 42L, 42R verteilbar ist.

Der Antriebsstrang 10 beinhaltet ferner eine elektrische Maschine 44, die als elektrischer Motor oder als elektrischer Generator (zum Rekuperieren) arbeiten kann.

Die elektrische Maschine 44 weist eine Längsachse auf, die parallel zu der Eingangswellenanordnung 24, 26 ausgerichtet ist.

Zwischen dem Abtriebsradsatz 34 und der Doppelkupplungsanordnung 15 ist eine Lagerebene 46 ausgebildet, die beispielsweise durch eine Gehäusewand zwischen der Getriebeanordnung 22 und der Doppelkupplungsanordnung 14 gebildet sein kann. An der Lagerebene 46 ist die Eingangswellenanordnung 24, 26 gelagert, wie auch die Ausgangswellen 30, 32.

Die Getriebeanordnung 22 weist ferner eine Brückenkupplungsanordnung 48 auf. Die Brückenkupplungsanordnung 48 beinhaltet eine Brückenkupplungswelle 50, die drehbar an der ersten Ausgangswelle 30 gelagert ist und dazu dient, die erste Eingangswelle 24 und die zweite Eingangswelle 26 miteinander zu koppeln, um auf diese Weise wenigstens eine Windungs-Gangstufe einzurichten.

An der Brückenkupplungswelle 50 ist zum einen ein Brücken-Festrad 52 drehfest festgelegt.

An der Brückenkupplungswelle 50 ist ferner ein Brücken-Losrad 54 drehbar gelagert, das mittels einer Brücken-Schaltkupplung 56 (Schaltkupplung A2 eines Schaltkupplungspaketes A1, A2) mit der Brückenkupplungswelle 50 verbindbar ist.

Das Brücken-Losrad 54 steht in Eingriff mit einem Radsatz 58 für eine Vorwärtsgangstufe 2. Der Radsatz 58 weist ein Festrad 60 auf, das an der ersten Eingangswelle 24 festgelegt ist, sowie ein Losrad 62, das drehbar an der zweiten Ausgangswelle 32 gelagert ist. Das Brücken-Losrad 54 steht in Eingriff mit dem Festrad 60. Unter "in Eingriff stehen" wird vorliegend insbesondere ein "Kämmen" bei Zahnrädern verstanden.

Die Getriebeanordnung 22 beinhaltet ferner einen Radsatz 64 für eine Vorwärtsgangstufe 3. Der Radsatz 64 weist ein Festrad 66 auf, das drehfest mit der zweiten Eingangswelle 26 verbunden ist, sowie ein Losrad, das durch das Brücken-Festrad 52 und die Tatsache gebildet ist, dass das Brücken-Festrad 52 gemeinsam mit der Brückenkupplungswelle 50 ein Losrad in Bezug auf die erste Ausgangswelle 30 bildet, das mittels einer Ausgangs-Schaltkupplung 68 (A1) mit der ersten Ausgangswelle 30 verbindbar ist.

Die Ausgangs-Schaltkupplung 68 und die Brücken-Schaltkupplung 56 sind in ein Schaltkupplungspaket A1, A2 integriert, das auf einer einem Getriebeeingang der Getriebeanordnung 22 abgewandten Seite des Brücken-Losrades 54 angeordnet ist.

Die Getriebeanordnung 22 beinhaltet ferner einen Radsatz 70 für die Vorwärtsgangstufe 4. Der Radsatz 70 weist ein Festrad 72 auf, das an der zweiten Eingangswelle 26 festgelegt ist, sowie ein Losrad 74, das drehbar an der zweiten Ausgangswelle 32 gelagert ist.

Axial mit dem Radsatz 70 ist ein Parksperrenrad 76 ausgerichtet, das an der ersten Ausgangswelle 30 festgelegt ist.

Das Losrad 74 für die Vorwärtsgangstufe 4 und das Losrad 62 für die Vorwärtsgangstufe 2 sind alternativ mittels eines Schaltkupplungspaketes B1, B2 mit der zweiten Ausgangswelle 32 verbindbar, das gemäß Fig. 1 zwei Schaltkupplungen B1 (für das Losrad 62) und B2 (für das Losrad 74) aufweist.

Die Getriebeanordnung 22 weist mehrere Radsatzebenen auf, einschließlich einer Abtriebsradsatzebene 78, innerhalb der der Abtriebsradsatz 34 angeordnet ist, und zwar benachbart zu der Lagerebene 46.

Gesehen vom Getriebeeingang aus ist benachbart zu der Abtriebsradsatzebene 78 eine erste Gangradsatzebene 80 angeordnet, innerhalb der der Radsatz 70 sowie das Parksperrenrad 76 angeordnet sind.

Weiterhin benachbart hierzu beinhaltet die Getriebeanordnung 22 eine zweite Gangradsatzebene 82, innerhalb der der Radsatz 64 für die Vorwärtsgangstufe 3 angeordnet ist. Ferner ist das Schaltkupplungspaket B1, B2 axial ausgerichtet mit der zweiten Gangradsatzebene 82.

Ferner beinhaltet die Getriebeanordnung 22 eine dritte Gangradsatzebene 84, innerhalb der der Radsatz 58 für die Vorwärtsgangstufe 2 angeordnet ist, als auch das Brücken-Losrad 54. In der dritten Gangradsatzebene 84 sind ferner ein Antriebsritzel 86 der elektrischen Maschine 44 und optional ein Zwischenzahnrad 87 angeordnet, wobei das Antriebsritzel 86 entweder direkt mit dem Brücken-Losrad 54 in Eingriff steht oder über das Zwischenrad 87.

Die Getriebeanordnung 22 stellt für einen verbrennungsmotorischen Betrieb vier Vorwärtsgangstufen dar. Die hierbei jeweils geschalteten Reibkupplungen und Schaltkupplungen ergeben sich aus der Tabelle im Anhang der Beschreibung.

Beispielhaft ist eine erste Vorwärtsgangstufe 1 als Windungs-Gangstufe ausgebildet, wobei die Kupplung K2 geschlossen ist und wobei die Schaltkupplungen A2, B1 geschlossen sind. Folglich fließt Leistung von der zweiten Reibkupplung K2 über die zweite Eingangswelle 26 und den Radsatz 64 hin zu der Brückenkupplungswelle 50, und von dort aufgrund der geschlossenen Brücken-Schaltkupplung A2 (56) über den Radsatz 58 bei geschlossener Schaltkupplung B1 hin zu der zweiten Ausgangswelle 32.

Die Vorwärtsgangstufen 2, 3, 4 sind jeweils als Direkt-Gangstufen ausgebildet, wobei zur Einrichtung der Vorwärtsgangstufe 2 die erste Reibkupplung K1 geschlossen ist sowie die Schaltkupplung B1. Zur Einrichtung der dritten Vorwärtsgangstufe ist die zweite Reibkupplung K2 geschlossen sowie die Schaltkupplung A1. Zum Einrichten der vierten Vorwärtsgangstufe ist die zweite Reibkupplung K2 geschlossen sowie die Schaltkupplung B2.

Da die Vorwärtsgangstufe 3 und die Vorwärtsgangstufe 4 unter Verwendung der Reibkupplung K2 eingerichtet werden, kann zwischen diesen Gangstufen nicht zugkraftunterbrechungsfrei geschaltet werden.

Für die elektrische Maschine sind zwei Vorwärtsgangstufen bereitgestellt. Eine erste elektrische Vorwärtsgangstufe wird geschaltet durch Schalten der Schaltkupplung B1, wobei beide Reibkupplungen K1, K2 geöffnet sind.

Die zweite Gangstufe für die elektrische Maschine wird geschaltet durch die Schaltkupplungen A2 und B2, wobei die Kupplungen K1, K2 geöffnet sind.

Dieser Leistungsfluss kann auch vertauscht werden, sodass die zweite Gangstufe durch die Schaltkupplung B1 geschaltet wird und die erste elektrische Vorwärtsgangstufe durch die Schaltkupplungen A2, B2.

Eine Rückwärtsgangstufe wird eingerichtet, indem für die elektrische Maschine die Vorwärtsgangstufe 1 eingerichtet wird und die elektrische Maschine anschließend in der entgegengesetzten Drehrichtung angetrieben wird.

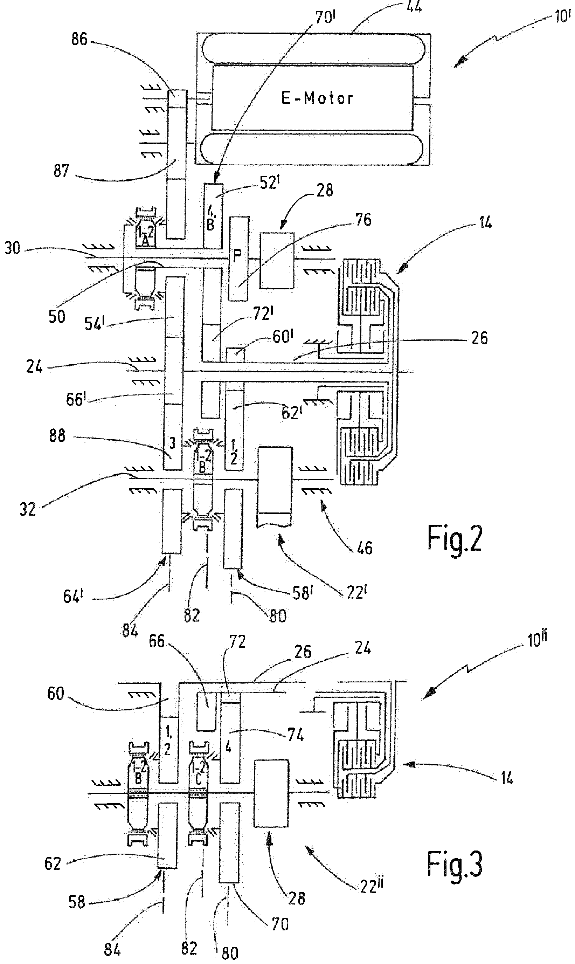

In den Fig. 2 bis 4 sind weitere Ausführungsformen von Hybridantriebssträngen gezeigt, die hinsichtlich Aufbau und Funktionsweise generell dem Hybridantriebsstrang der Fig. 1 entsprechen. Gleiche Elemente sind daher durch gleiche Bezugszeichen gekennzeichnet. Im Folgenden werden im Wesentlichen die Unterschiede erläutert.

Die Schaltkupplungstabellen für die Ausführungsformen der Fig. 2, 3 und 4 befinden sich ebenfalls im Anhang dieser Beschreibung.

Bei dem Hybridantriebsstrang 10' der Fig. 2 ist in der ersten Gangradsatzebene 80 ein Radsatz 58' für die Vorwärtsgangstufe 2 angeordnet, der auch zur Einrichtung der Windungs-Vorwärtsgangstufe 1 dient.

In der zweiten Gangradsatzebene 82 ist der Radsatz 70' für die Vorwärtsgangstufe 4 angeordnet.

In der dritten Gangradsatzebene 84 ist der Radsatz 64' für die Vorwärtsgangstufe 3 angeordnet.

Bei dem Hybridantriebsstrang 10' ist das Losrad des Radsatzes 64' zur Einrichtung der Direkt-Vorwärtsgangstufe 3 mit 88 bezeichnet.

Im Übrigen entspricht das Layout des Antriebsstranges 10' der Fig. 2 jenem der Fig. 1.

In Fig. 3 ist eine alternative Ausführungsform des Antriebsstranges 10' der Fig. 1 dargestellt und generell mit 10" bezeichnet.

Hierbei ist das Schaltkupplungspaket B1, B2 zwischen den Losrädern 62, 70 aufgelöst bzw. aufgeteilt in zwei einzelne Schaltkupplungen C2 zwischen den Losrädern 58, 70 und einer Schaltkupplung B2 auf der dem Getriebeeingang abgewandten axialen Seite des Radsatzes 58.

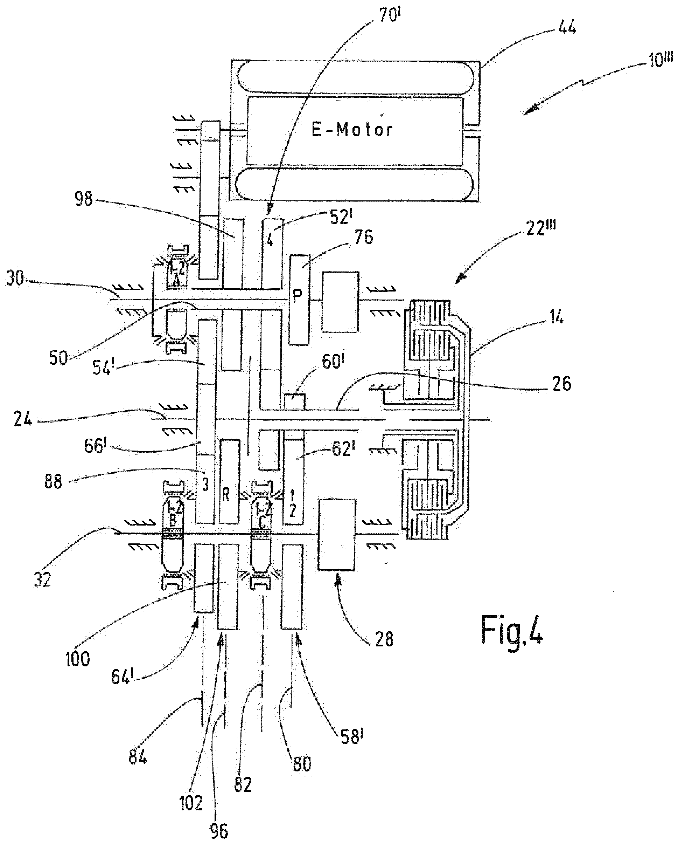

Der Hybridantriebsstrang 10'" der Fig. 4 entspricht generell dem Hybridantriebsstrang 10' der Fig. 2.

In Fig. 4 ist zwischen Gangradsatzebenen 82, 84 eine weitere Radsatzebene für eine Rückwärtsgangstufe eingefügt und mit 96 bezeichnet.

In der Rückwärtsgang-Radsatzebene 96 sind ein Rückwärtsgang-Festrad 98 angeordnet, das an der Brückenkupplungswelle 50 festgelegt ist, sowie ein Rückwärtsgangstufen-Losrad 100, das drehbar an der zweiten Ausgangswelle 32 gelagert ist.

Die Zahnräder 98, 100 bilden einen Rückwärtsgangstufen-Radsatz 102.

Ferner ist zwischen den Losrädern 100, 58' ein Schaltkupplungspaket mit Schaltkupplungen C1, C2 angeordnet.

Auf der dem Getriebeeingang axial abgewandten Seite des Losrades 64' ist eine Schaltkupplung B2 angeordnet, die dem Losrad 88 zugeordnet ist.

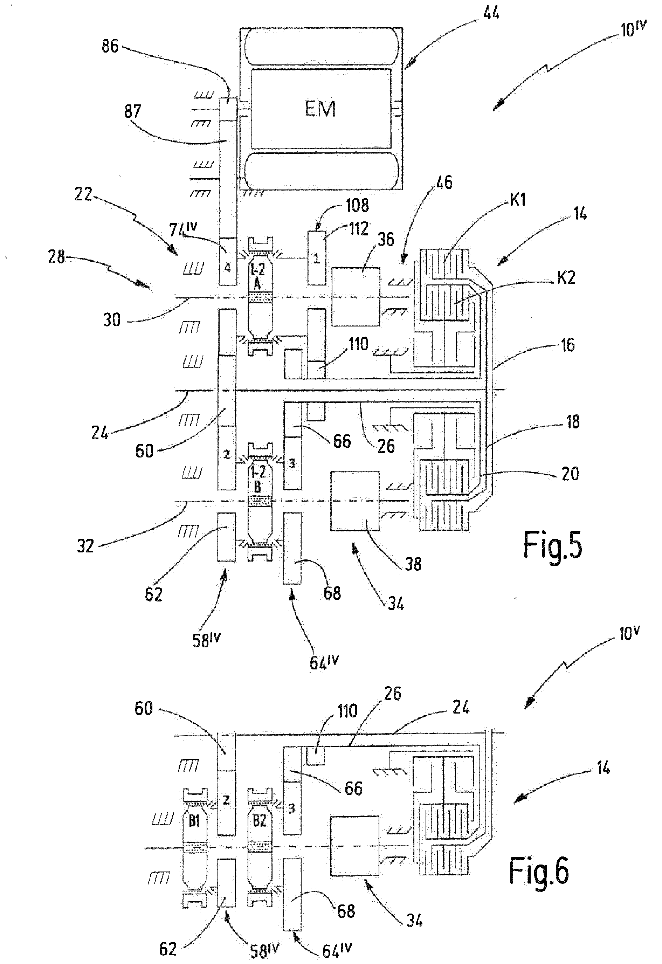

In den Figuren 5 und 6 sind zwei weitere Ausführungsformen von Hybridantriebssträngen 10^{IV} und 10^{V} dargestellt, die hinsichtlich Aufbau und Funktionsweise generell den oben beschriebenen Antriebssträngen, insbesondere jenem der Fig. 3, entsprechen. Gleiche Elemente sind daher durch gleiche Bezugszeichen gekennzeichnet. Im Folgenden werden im Wesentlichen die Unterschiede erläutert.

Bei den Hybrid-Antriebssträngen 10^{IV} und 10^{V} der Figuren 5 und 6 sind Vorwärtsgangstufen 1 bis 4 ausschließlich als Direkt-Vorwärtsgangstufen realisiert. Die Antriebsstränge 10^{IV} und 10^{V} weisen folglich keine Brückenkupplungsanordnung 48 auf.

Die Vorwärtsgangstufe 1 ist folglich nicht als Windungsgangstufe realisiert. Vielmehr ist für die Vorwärtsgangstufe 1 ein eigener Radsatz 108 vorgesehen, der ein Festrad 110 aufweist, das an der zweiten Eingangswelle 26 festgelegt ist, sowie ein Losrad 112, das drehbar an der ersten Ausgangswelle 30 gelagert ist.

Bei dem Antriebsstrang 10^{IV} der Figur 5 sind an der zweiten Eingangswelle 26, von dem Getriebeeingang aus gesehen, das Festrad 110 für die Vorwärtsgangstufe 1 sowie das Festrad 66 für die Vorwärtsgangstufe 3 angeordnet. An der zweiten Ausgangswelle sind, von dem Getriebeausgang aus gesehen, das Losrad 68 für die Vorwärtsgangstufe 3 und das Losrad 62 für die Vorwärtsgangstufe 2 drehbar gelagert. Zwischen diesen Losrädern 62, 68 ist ein Schaltkupplungspaket B1, B2 angeordnet, mittels dessen die Vorwärtsgangstufen 2 und 3 alternativ betätigbar sind, derart, dass Gangwechsel dazwischen nicht zugkraftunterbrechungsfrei durchgeführt werden können.

An der ersten Ausgangswelle 30 sind, von dem Getriebeeingang aus gesehen, das Losrad 112 für die Vorwärtsgangstufe 1 sowie das Losrad 74^{IV} für die Vorwärtsgangstufe 4 angeordnet, wobei das Losrad 74^{IV} mit dem Festrad 60 in Eingriff steht, so dass für die Vorwärtsgangstufen 2 und 4 eine Doppelnutzung realisiert ist. Zwischen den Losrädern 112, 74^{IV} ist an der ersten Ausgangswelle 30 ein Schaltkupplungspaket A1, A2 angeordnet, mittels dessen die Vorwärtsgangstufen 1 und 4 alternativ betätigbar sind.

An das Losrad 74^{IV} ist ferner die elektrische Maschine 44 angeschlossen, und zwar vorliegend über das Antriebsritzel 86 und ein Zwischenrad 87.

Der Antriebsstrang 10^{IV} kann zwei Vorwärtsgangstufen (Vorwärtsgangstufen 2 und 4) für die elektrische Maschine 44 bereitstellen, sowie vier Vorwärtsgangstufen für einen verbrennungsmotorischen Antrieb. Ein mechanisches Reversieren mittels des Verbrennungsmotors ist nicht möglich. Ein Rückwärtsfahren ist folglich ausschließlich über die elektrische Maschine 44 realisierbar. Gegebenenfalls kann das Getriebe um eine Radsatzebene für eine Rückwärtsgangstufe erweitert werden, ähnlich wie bei der Ausführungsform der Fig. 4.

In Fig. 6 ist ein weiterer Hybridantriebsstrang 10^{V} gezeigt, der hinsichtlich Aufbau und Funktionsweise generell dem Hybridantriebsstrang 10^{IV} der Fig. 5 entspricht. Gleiche Elemente sind daher durch gleiche Bezugszeichen gekennzeichnet. Im Folgenden werden im Wesentlichen die Unterschiede erläutert.

Bei dem Antriebsstrang 10^{V} ist das Schaltkupplungspaket B1, B2, das bei der Ausführungsform der Fig. 5 zwischen den Losrädern 62, 68 angeordnet ist, und das mittels eines einzelnen Schaltgliedes betätigbar ist, in zwei Einzel-Schaltkupplungspakete B1, B2 aufgeteilt. Das Schaltkupplungspaket B2 ist dabei zwischen den Losrädern 62, 68 angeordnet und dient ausschließlich zum Schalten der Vorwärtsgangstufe 3.

Ein weiteres Schaltkupplungspaket, das eine einzelne Schaltkupplung B1 aufweist, ist der Vorwärtsgangstufe 2 zugeordnet. Das Schaltkupplungspaket B1 für die Vorwärtsgangstufe 2 ist bei der Ausführungsform der Fig. 6 auf einer dem Getriebeeingang abgewandten axialen Seite des Radsatzes 58^{IV} für die Vorwärtsgangstufe 2 angeordnet. Bei dieser Ausführungsform können Gangwechsel zwischen den Vorwärtsgangstufen 2 und 3 unter Last realisiert werden. Dafür baut der Hybridantriebsstrang 10^{V} axial um die Baulänge einer Schaltkupplung länger als der Hybridantriebsstrang 10^{IV} der Fig. 5.

| | | **Gang** | **K1** | **K2** | **A1** | **A2** | **B1** | **B2** | **C1** | **C2** |
|---|---|---|---|---|---|---|---|---|---|---|
| FIG 1 | ICE | 1 | 0 | X | 0 | X | X | 0 | - | - |
| | | 2 | X | 0 | 0 | 0 | X | 0 | - | -- |
| | | 3 | 0 | X | X | 0 | 0 | 0 | - | - |
| | | 4 | 0 | X | 0 | 0 | 0 | X | - | - |
| | EM | 1 | 0 | 0 | 0 | 0 | X | 0 | - | - |
| | | 2 | 0 | 0 | 0 | X | 0 | X | - | - |
| FIG 2 | ICE | 1 | X | 0 | 0 | X | 0 | X | - | - |
| | | 2 | 0 | X | 0 | 0 | 0 | X | - | - |
| | | 3 | X | 0 | 0 | 0 | X | 0 | - | - |
| | | 4 | 0 | X | X | 0 | 0 | 0 | - | - |
| | EM | 1 | 0 | 0 | 0 | X | 0 | X | - | - |
| | | 2 | 0 | 0 | 0 | 0 | X | 0 | - | - |
| FIG 3 | ICE | 1 | 0 | X | 0 | X | - | X | - | 0 |
| | | 2 | X | 0 | 0 | 0 | - | X | - | 0 |
| | | 3 | 0 | X | X | 0 | - | 0 | - | 0 |
| | | 4 | 0 | X | 0 | 0 | - | 0 | - | X |
| | EM | 1 | 0 | 0 | 0 | 0 | - | X | - | 0 |
| | | 2 | 0 | 0 | 0 | X | - | 0 | - | X |
| FIG 4 | ICE | 1 | X | 0 | 0 | X | - | 0 | 0 | X |
| | | 2 | 0 | X | 0 | 0 | - | 0 | 0 | X |
| | | 3 | X | 0 | 0 | 0 | - | X | 0 | 0 |
| | | 4 | 0 | X | X | 0 | - | 0 | 0 | 0 |
| | | R | 0 | X | 0 | 0 | - | 0 | X | 0 |
| | EM | 1 | 0 | 0 | 0 | X | - | 0 | 0 | X |
| | | 2 | 0 | 0 | 0 | 0 | - | X | 0 | 0 |
| | | R | 0 | 0 | 0 | X | - | 0 | X | 0 |

## Patentansprüche

1. Hybridantriebsstrang (10) für ein Kraftfahrzeug, mit
- einer Doppelkupplungsanordnung (14), die ein Eingangsglied (16) aufweist, das mit einem Verbrennungsmotor (12) verbindbar ist, und die ein erstes Ausgangsglied (18) und ein zweites Ausgangsglied (20) aufweist;
- einer Getriebeanordnung (22), die eine erste Eingangswelle (24) und eine zweite Eingangswelle (26) aufweist, wobei die erste Eingangswelle (24) mit dem ersten Ausgangsglied (18) verbunden ist und wobei die zweite Eingangswelle (26) mit dem zweiten Ausgangsglied (20) verbunden ist, und die eine Ausgangswellenanordnung (28) aufweist;
wobei die Getriebeanordnung (22) eine Mehrzahl von Radsätzen (58, 64, 70; 64', 70', 58') aufweist, die zur Einrichtung von Gangstufen dienen und jeweils eine Eingangswelle (18, 20) mit der Ausgangswellenanordnung (28) verbinden, die erste Eingangswelle (24) über einen ersten Radsatz (58; 64') mit der Ausgangswellenanordnung (28) verbunden ist, um eine erste Direkt-Gangstufe (2; 3), wobei bei einer Direkt-Gangstufe ein Leistungsfluss ausschließlich von einer Eingangswelle (24, 26) zu einer Ausgangswelle fließt, einzurichten, wobei die zweite Eingangswelle (26) über einen zweiten Radsatz (70; 58') mit der Ausgangswellenanordnung (28) verbunden ist, um eine zweite Direkt-Gangstufe (4; 2) einzurichten, wobei die erste Direkt-Gangstufe (2; 3) und die zweite Direkt-Gangstufe (4; 2) alternativ mittels eines Schaltkupplungspaketes (B2, B1) schaltbar sind, wobei die Getriebeanordnung (22) ferner eine Brückenkupplungsanordnung (48) mit einer Brückenkupplungswelle (50) und mit einer Brücken-Schaltkupplung (56) aufweist, mittels der die erste Eingangswelle (24) und die zweite Eingangswelle (26) miteinander koppelbar sind,.
**dadurch gekennzeichnet, dass**
an der Brückenkupplungswelle (50) ein Brücken-Losrad (54; 54') drehbar gelagert ist, das mit einem Radsatz (58; 64) zur Einrichtung einer Direkt-Gangstufe (2; 3) in Eingriff steht und/oder das mit einem Antriebsritzel (86) einer elektrischen Maschine (44) drehkoppelbar ist, wobei das Brücken-Losrad (54; 54') mittels der Brücken-Schaltkupplung (56) mit der Brückenkupplungswelle (50) verbindbar ist, wobei das Brücken-Losrad (54; 54') vorzugsweise in einer Radsatzebene (84) mit dem Antriebsritzel (86) der elektrischen Maschine (44) angeordnet ist und/oder in einer Radsatzebene (84) mit dem ersten Radsatz (58; 64') angeordnet ist.

2. Hybridantriebsstrang nach Anspruch 1, **dadurch gekennzeichnet, dass** die erste Direkt-Gangstufe (2;3) und die zweite Direkt-Gangstufe (3;2) benachbarte Vorwärtsgangstufen sind.

3. Hybridantriebsstrang nach Anspruch 1 oder 2, **dadurch gekennzeichnet, dass** der ersten Eingangswelle (24) mindestens eine gerade Vorwärtsgangstufe als auch mindestens eine ungerade Vorwärtsgangstufe zugeordnet sind und/oder der zweiten Eingangswelle (26) mindestens eine gerade Vorwärtsgangstufe als auch eine ungerade Vorwärtsgangstufe zugeordnet sind.

4. Hybridantriebsstrang nach einem der Ansprüche1 - 3,
**dadurch gekennzeichnet, dass** eine Vorwärtsgangstufe 2 der ersten Eingangswelle (24) oder der zweiten Eingangswelle (26) zugeordnet ist, wobei eine Vorwärtsgangstufe 4 der anderen Eingangswelle zugeordnet ist und/oder
**dadurch gekennzeichnet, dass** die Getriebeanordnung (22) dazu ausgebildet ist, eine Anzahl von Vorwärtsgangstufen einrichten, wobei eine Zuordnung der Vorwärtsgangstufen zu der ersten Eingangswelle (24) oder zu der zweiten Eingangswelle (26) und eine Zuordnung von Schaltkupplungen zu diesen Vorwärtsgangstufen so realisiert sind, dass ein Gangwechsel von Vorwärtsgangstufe 1 in Vorwärtsgangstufe 2 und/oder ein Gangwechsel von Vorwärtsgangstufe 2 in Vorwärtsgangstufe 3 unter Last durchführbar sind, wobei ein zugkraftunterbrechungsfreier Gangwechsel erfolgt, und/oder
**dadurch gekennzeichnet, dass** sämtliche Gangstufen der Getriebeanordnung (22) mittels zweier Schaltkupplungspakete ein- und auslegbar sind, in die jeweils zwei alternativ betätigbare Schaltkupplungen integriert sind.

5. Hybridantriebsstrang nach Anspruch 1, **dadurch gekennzeichnet, dass** an der Brückenkupplungswelle (50) ein Brücken-Festrad (52) eines Radsatzes (64; 70') zur Einrichtung einer Direkt-Gangstufe (3; 4) festgelegt ist, und/oder
**dadurch gekennzeichnet, dass** die Brückenkupplungswelle (50) mittels einer Ausgangs-Schaltkupplung (A1) mit einer Ausgangswelle (30) der Ausgangswellenanordnung (28) verbindbar ist, und/oder
**dadurch gekennzeichnet, dass** die Brückenkupplungswelle (50) als Hohlwelle an einer Ausgangswelle (30) der Ausgangswellenanordnung (28) drehbar gelagert ist.

6. Hybridantriebsstrang nach einem der Ansprüche 1 bis 5, **dadurch gekennzeichnet, dass** die erste Eingangswelle (24) über einen ersten Radsatz (58; 64') mit der Ausgangswellenanordnung (28) verbunden ist, um eine erste Direkt-Gangstufe (2; 3) einzurichten, wobei die Eingangswelle (26) über einen zweiten Radsatz (70; 58') mit der Ausgangswellenanordnung (28) verbunden ist, um eine zweite Direkt-Gangstufe (4; 2) einzurichten, und wobei die zweite Eingangswelle (26) über einen dritten Radsatz (64; 70') mit der Ausgangswellenanordnung (28) verbunden ist, um eine dritte Gangstufe (3; 4) einzurichten.

7. Hybridantriebsstrang nach Anspruch 6, **dadurch gekennzeichnet, dass** der dritte Radsatz (64; 70') ein mit der Brückenkupplungswelle (50) verbundenes Brücken-Festrad (52) aufweist, wobei die Brückenkupplungswelle (50) mittels einer Ausgangs-Schaltkupplung (A1) mit der Ausgangswellenanordnung (28) verbindbar ist.

8. Hybridantriebsstrang nach einem der Ansprüche 1 bis 7, **dadurch gekennzeichnet, dass** die Ausgangswellenanordnung (28) eine erste Ausgangswelle (30) und eine zweite Ausgangswelle (32) aufweist, die über einen Abtriebsradsatz (34) mit einem Differential (40) verbindbar sind, wobei vorzugsweise der Abtriebsradsatz (34) in axialer Richtung zwischen der Doppelkupplungsanordnung (14) und einem Getriebeeingang der Getriebeanordnung (22) angeordnet ist.

9. Hybridantriebsstrang nach einem der Ansprüche 1 bis 8, **dadurch gekennzeichnet, dass** an der ersten Eingangswelle (24) genau ein Festrad (60; 66') für eine Direkt-Vorwärtsgangstufe (2; 3) festgelegt ist und/oder an der zweiten Eingangswelle (26) genau zwei Festräder für weitere Direkt-Vorwärtsgangstufen angeordnet sind.

10. Hybridantriebsstrang nach einem der Ansprüche 1 bis 9 , **dadurch gekennzeichnet, dass**, von einem Getriebeeingang der Getriebeanordnung (22) aus gesehen, koaxial zu einer ersten Ausgangswelle (30) ein Parksperrenrad (76), ein Rad (52; 52') für eine Vorwärtsgangstufe (3; 4), optional ein Rückwärtsgangstufen-Rad (98), ein Brücken-Losrad (54; 54') und ein Schaltkupplungspaket (A1, A2) mit einer Brücken-Schaltkupplung (A2) und mit einer Ausgangs-Schaltkupplung (A1) angeordnet sind.

11. Hybridantriebsstrang nach einem der Ansprüche 1 bis 10, **dadurch gekennzeichnet, dass**, von einem Getriebeeingang der Getriebeanordnung (22) aus gesehen, koaxial zu einer zweiten Ausgangswelle (32) ein Losrad (74; 62') für eine Vorwärtsgangstufe (4; 2), ein Schaltkupplungspaket (B2, B2; C2, C1), optional ein Rückwärtsgangstufen-Losrad (100), ein Losrad (62; 88) für eine weitere Gangstufe (2; 3) und optional ein weiteres Schaltkupplungspaket (B2, B1) angeordnet sind.

12. Hybridantriebsstrang nach einem der Ansprüche 1 bis 11, **dadurch gekennzeichnet, dass** an der zweiten Eingangswelle (26) Festräder (66, 72) von zwei unmittelbar benachbarten Vorwärtsgangstufen (3; 4) festgelegt sind.

13. Hybridantriebsstrang nach einem der Ansprüche 1 bis 12, **dadurch gekennzeichnet, dass** an einer zweiten Ausgangswelle (32) zwei unterschiedlichen Vorwärtsgangstufen zugeordnete Losräder (62, 74; 64', 62') drehbar gelagert sind, die mittels eines dazwischen liegenden Schaltkupplungspaketes (B1, B2) alternativ mit der zweiten Ausgangswelle (32) verbindbar sind oder die mittels unabhängig voneinander schaltbarer Schaltkupplungen (B2, D2) mit der zweiten Ausgangswelle (32) verbindbar sind.

## Claims

1. Hybrid drivetrain (10) for a motor vehicle, comprising
- a double clutch arrangement (14) which has an input member (16) which can be connected to an internal combustion engine (12), and which double clutch arrangement (14) has a first output member (18) and a second output member (20);
- a transmission arrangement (22) which has a first input shaft (24) and a second input shaft (26), the first input shaft (24) being connected to the first output member (18), and the second input shaft (26) being connected to the second output member (20), and which transmission arrangement (22) has an output shaft arrangement (28);
the transmission arrangement (22) having a plurality of gear sets (58, 64, 70; 64', 70', 58') which serve to set up gear stages and in each case connect an input shaft (18, 20) to the output shaft arrangement (28), the first input shaft (24) being connected via a first gear set (58; 64') to the output shaft arrangement (28), in order to set up a first direct gear stage (2; 3), a power flow flowing exclusively from an input shaft (24, 26) to an output shaft in the case of a direct gear stage, the second input shaft (26) being connected via a second gear set (70; 58') to the output shaft arrangement (28), in order to set up a second direct gear stage (4; 2), it being possible for the first direct gear stage (2; 3) and the second direct gear stage (4; 2) to be selected alternately by means of a shifting clutch pack (B2, B1), the transmission arrangement (22) having, furthermore, a bridging clutch arrangement (48) with a bridging clutch shaft (50) and with a bridging shifting clutch (56), by means of which the first input shaft (24) and the second input shaft (26) can be coupled to one another,
**characterized in that**
a bridging idler gear (54; 54') is mounted rotatably on the bridging clutch shaft (50), which bridging idler gear (54; 54') is in engagement with a gear set (58; 64) for setting up a direct gear stage (2; 3), and/or which bridging idler gear (54; 54') can be coupled rotationally to a drive pinion (86) of an electric machine (44), it being possible for the bridging idler gear (54; 54') to be connected by means of the bridging shifting clutch (56) to the bridging clutch shaft (50), the bridging idler gear (54; 54') preferably being arranged in one gear set plane (84) with the drive pinion (86) of the electric machine (44) and/or being arranged in one gear set plane (84) with the first gear set (58; 64').

2. Hybrid drivetrain according to Claim 1, **characterized in that** the first direct gear stage (2; 3) and the second direct gear stage (3; 2) are adjoining forward gear stages.

3. Hybrid drivetrain according to Claim 1 or 2, **characterized in that** the first input shaft (24) is assigned at least one even forward gear stage and also at least one odd forward gear stage, and/or the second input shaft (26) is assigned at least one even forward gear stage and also an odd forward gear stage.

4. Hybrid drivetrain according to one of Claims 1 to 3,
**characterized in that** a forward gear stage 2 is assigned to the first input shaft (24) or the second input shaft (26), a forward gear stage 4 being assigned to the other input shaft, and/or
**characterized in that** the transmission arrangement (22) is configured to set up a number of forward gear stages, an assignment of the forward gear stages to the first input shaft (24) or to the second input shaft (26) and an assignment of shifting clutches to the said forward gear stages being realised in such a way that a gear change from forward gear stage 1 into forward gear stage 2 and/or a gear change from forward gear stage 2 into forward gear stage 3 can be carried out in a power-shifting manner, a gear change which is free from an interruption of the traction force taking place, and/or
**characterized in that** all the gear stages of the transmission arrangement (22) can be engaged and disengaged by means of two shifting clutch packs, into which in each case two alternately actuable shifting clutches are integrated.

5. Hybrid drivetrain according to Claim 1, **characterized in that** a bridging fixed gear (52) of a gear set (64; 70') for setting up a direct gear stage (3; 4) is fixed on the bridging clutch shaft (50), and/or
**characterized in that** the bridging clutch shaft (50) can be connected by means of an output shifting clutch (A1) to an output shaft (30) of the output shaft arrangement (28), and/or
**characterized in that** the bridging clutch shaft (50) is mounted rotatably as a hollow shaft on an output shaft (30) of the output shaft arrangement (28).

6. Hybrid drivetrain according to one of Claims 1 to 5, **characterized in that** the first input shaft (24) is connected via a first gear set (58; 64') to the output shaft arrangement (28), in order to set up a first direct gear stage (2; 3), the input shaft (26) being connected via a second gear set (70; 58') to the output shaft arrangement (28), in order to set up a second direct gear stage (4; 2), and the second input shaft (26) being connected via a third gear set (64; 70') to the output shaft arrangement (28), in order to set up a third gear stage (3; 4).

7. Hybrid drivetrain according to Claim 6, **characterized in that** the third gear set (64; 70') has a bridging fixed gear (52) which is connected to the bridging clutch shaft (50), it being possible for the bridging clutch shaft (50) to be connected by means of an output shifting clutch (A1) to the output shaft arrangement (28).

8. Hybrid drivetrain according to one of Claims 1 to 7, **characterized in that** the output shaft arrangement (28) has a first output shaft (30) and a second output shaft (32) which can be connected via an output gear set (34) to a differential (40), the output gear set (34) preferably being arranged in the axial direction between the double clutch arrangement (14) and a transmission input of the transmission arrangement (22).

9. Hybrid drivetrain according to one of Claims 1 to 8, **characterized in that** precisely one fixed gear (60; 66') for a direct forward gear (2; 3) is fixed on the first input shaft (24), and/or precisely two fixed gears for further direct forward gear stages are arranged on the second input shaft (26).

10. Hybrid drivetrain according to one of Claims 1 to 9, **characterized in that**, as viewed from a transmission input of the transmission arrangement (22), a parking lock gear (76), a gear (52; 52') for a forward gear stage (3; 4), optionally a reverse gear stage gear (98), a bridging idler gear (54; 54') and a shifting clutch pack (A1, A2) with a bridging shifting clutch (A2) and with an output shifting clutch (A1) being arranged coaxially with respect to a first output shaft (30).

11. Hybrid drivetrain according to one of Claims 1 to 10, **characterized in that**, as viewed from a transmission input of the transmission arrangement (22), an idler gear (74; 62') for a forward gear stage (4; 2), a shifting clutch pack (B2, B2; C2, C1), optionally a reverse gear stage idler gear (100), an idler gear (62; 88) for a further gear stage (2; 3) and optionally a further shifting clutch pack (B2, B1) are arranged coaxially with respect to a second output shaft (32).

12. Hybrid drivetrain according to one of Claims 1 to 11, **characterized in that** fixed gears (66, 72) of two directly adjoining forward gear stages (3; 4) are fixed on the second input shaft (26).

13. Hybrid drivetrain according to one of Claims 1 to 12, **characterized in that** idler gears (62, 74; 64', 62') which are assigned to two different forward gear stages are mounted rotatably on a second output shaft (32), which idler gears (62, 74; 64', 62') can be connected alternately to the second output shaft (32) by means of a shifting clutch pack (B1, B2) which lies in between, or which idler gears (62, 74; 64', 62') can be connected to the second output shaft (32) by means of shifting clutches (B2, D2) which can be shifted independently of one another.

## Revendications

1. Chaîne cinématique hybride (10) pour un véhicule automobile, comprenant
- un ensemble à double embrayage (14) qui présente un élément d'entrée (16) qui peut être relié à un moteur à combustion interne (12), et qui présente un premier élément de sortie (18) et un deuxième élément de sortie (20) ;
- un ensemble de boîte de vitesses (22) qui présente un premier arbre d'entrée (24) et un deuxième arbre d'entrée (26), le premier arbre d'entrée (24) étant relié au premier élément de sortie (18), et le deuxième arbre d'entrée (26) étant relié au deuxième élément de sortie (20), et qui présente un ensemble d'arbre de sortie (28) ;
dans laquelle l'ensemble de boîte de vitesses (22) présente une pluralité de jeux de pignons (58, 64, 70 ; 64', 70', 58') qui servent à aménager des rapports de vitesse et relient respectivement un arbre d'entrée (18, 20) à l'ensemble d'arbre de sortie (28), le premier arbre d'entrée (24) est relié par un premier jeu de pignons (58 ; 64') à l'ensemble d'arbre de sortie (28) pour aménager un premier rapport de vitesse direct (2 ; 3), un flux de puissance circulant exclusivement d'un arbre d'entrée (24, 26) à un arbre de sortie dans le cas d'un rapport de vitesse direct, le deuxième arbre d'entrée (26) étant relié par un deuxième jeu de pignons (70 ; 58') à l'ensemble d'arbre de sortie (28) pour aménager un deuxième rapport de vitesse direct (4 ; 2), dans laquelle le premier rapport de vitesse direct (2 ; 3) et le deuxième rapport de vitesse direct (4 ; 2) peuvent être enclenchés alternativement au moyen d'un pack d'embrayage (B2, B1), l'ensemble de boîte de vitesses (22) présentant en outre un ensemble d'embrayage à pont (48) pourvu d'un arbre d'embrayage à pont (50) et d'un embrayage en pont (56) qui permet de coupler le premier arbre d'entrée (24) et le deuxième arbre d'entrée (26),
**caractérisé en ce que** sur l'arbre d'embrayage à pont (50) un pignon fou de pontage (54 ; 54') est monté rotatif qui est en prise avec un jeu de pignons (58 ; 64) pour aménager un rapport de vitesse direct (2 ; 3) et/ou qui peut être couplé en rotation avec un pignon menant (86) d'une machine électrique (44), le pignon fou de pontage (54 ; 54') pouvant être relié à l'arbre d'embrayage à pont (50) au moyen de l'embrayage en pont (56), le pignon fou de pontage (54 ; 54') étant de préférence disposé dans un plan de jeu de pignons (84) avec le pignon menant (86) de la machine électrique (44) et/ou dans un plan de jeu de pignons (84) avec le premier jeu de pignons (58 ; 64').

2. Chaîne cinématique hybride selon la revendication 1, **caractérisée en ce que** le premier rapport de vitesse direct (2 ; 3) et le deuxième rapport de vitesse direct (3 ; 2) sont des rapports de vitesse de marche avant contigus.

3. Chaîne cinématique hybride selon la revendication 1 ou 2, **caractérisée en ce qu'**au moins un rapport de vitesse de marche avant pair ainsi qu'au moins un rapport de vitesse de marche avant impair sont associés au premier arbre d'entrée (24) et/ou au moins un rapport de vitesse de marche avant pair ainsi qu'un rapport de vitesse de marche avant impair sont associés au deuxième arbre d'entrée (26).

4. Chaîne cinématique hybride selon l'une quelconque des revendications 1 à 3,
**caractérisée en ce qu'**un rapport de vitesse de marche avant 2 est associé au premier arbre d'entrée (24) ou au deuxième arbre d'entrée (26), un rapport de vitesse de marche avant 4 étant associé à l'autre arbre d'entrée, et/ou
**caractérisée en ce que** l'ensemble de boîte de vitesses (22) est réalisé pour aménager un nombre de rapports de vitesse de marche avant, une association des rapports de vitesse de marche avant au premier arbre d'entrée (24) ou au deuxième arbre d'entrée (26) et une association d'embrayages à ces rapports de vitesse de marche avant étant réalisées de telle sorte qu'un changement de vitesse du rapport de vitesse de marche avant 1 au rapport de vitesse de marche avant 2 et/ou un changement de vitesse du rapport de vitesse de marche avant 2 au rapport de vitesse de marche avant 3 peuvent être effectués sous charge, un changement de vitesse ayant lieu sans interruption de force de traction, et/ou
**caractérisée en ce que** tous les rapports de vitesse de l'ensemble de boîte de vitesses (22) peuvent être enclenchés et déclenchés au moyen de deux packs d'embrayage dans lesquels respectivement deux embrayages actionnables alternativement sont intégrés.

5. Chaîne cinématique hybride selon la revendication 1, **caractérisée en ce que** sur l'arbre d'embrayage à pont (50) un pignon fixe de pontage (52) d'un jeu de pignons (64 ; 70') est immobilisé pour aménager un rapport de vitesse direct (3 ; 4), et/ou
**caractérisée en ce que** l'arbre d'embrayage à pont (50) peut être relié au moyen d'un embrayage de sortie (A1) à un arbre de sortie (30) de l'ensemble d'arbre de sortie (28), et/ou
**caractérisée en ce que** l'arbre d'embrayage à pont (50) est monté rotatif sous la forme d'un arbre creux sur un arbre de sortie (30) de l'ensemble d'arbre de sortie (28).

6. Chaîne cinématique hybride selon l'une quelconque des revendications 1 à 5, **caractérisée en ce que** le premier arbre d'entrée (24) est relié par un premier jeu de pignons (58; 64') à l'ensemble d'arbre de sortie (28) afin d'aménager un premier rapport de vitesse direct (2 ; 3), dans laquelle l'arbre d'entrée (26) est relié par un deuxième jeu de pignons (70 ; 58') à l'ensemble d'arbre de sortie (28) afin d'aménager un deuxième rapport de vitesse direct (4 ; 2), et dans laquelle le deuxième arbre d'entrée (26) est relié par un troisième jeu de pignons (64 ; 70') à l'ensemble d'arbre de sortie (28) pour aménager un troisième rapport de vitesse (3 ; 4).

7. Chaîne cinématique hybride selon la revendication 6, **caractérisée en ce que** le troisième jeu de pignons (64 ; 70') présente un pignon fixe de pontage (52) relié à l'arbre d'embrayage à pont (50), l'arbre d'embrayage à pont (50) pouvant être relié à l'ensemble d'arbre de sortie (28) au moyen d'un embrayage de sortie (A1).

8. Chaîne cinématique hybride selon l'une quelconque des revendications 1 à 7, **caractérisée en ce que** l'ensemble d'arbre de sortie (28) présente un premier arbre de sortie (30) et un deuxième arbre de sortie (32) qui peuvent être reliés à un différentiel (40) par l'intermédiaire d'un ensemble de pignons de sortie (34), l'ensemble de pignons de sortie (34) étant de préférence disposé dans la direction axiale entre l'ensemble à double embrayage (14) et une entrée de boîte de vitesses de l'ensemble de boîte de vitesses (22).

9. Chaîne cinématique hybride selon l'une quelconque des revendications 1 à 8, **caractérisée en ce que** sur le premier arbre d'entrée (24), exactement un pignon fixe (60 ; 66') est immobilisé pour un rapport de vitesse de marche avant direct (2 ; 3), et/ou sur le deuxième arbre d'entrée (26), exactement deux pignons fixes sont disposés pour d'autres rapports de vitesse de marche avant directs.

10. Chaîne cinématique hybride selon l'une quelconque des revendications 1 à 9, **caractérisée en ce que**, vu depuis une entrée de boîte de vitesses de l'ensemble de boîte de vitesses (22), un pignon de verrouillage de stationnement (76), un pignon (52; 52') pour un rapport de vitesse de marche avant (3 ; 4), en option un pignon de rapport de vitesse de marche arrière (98), un pignon fou de pontage (54 ; 54') et un pack d'embrayage (A1, A2) sont disposés avec un embrayage à pont (A2) et un embrayage de sortie (A1) coaxialement à un premier arbre de sortie (30).

11. Chaîne cinématique hybride selon l'une quelconque des revendications 1 à 10, **caractérisée en ce que**, vu depuis une entrée de boîte de vitesses de l'ensemble de boîte de vitesses (22), un pignon fou (74 ; 62') pour un rapport de vitesse de marche avant (4 ; 2), un pack d'embrayage (B2, B2 ; C2, C1), en option un pignon fou de rapport de vitesse de marche arrière (100), un pignon fou (62 ; 88) pour un rapport de vitesse supplémentaire (2 ; 3) et en option un pack d'embrayage supplémentaire (B2, B1) sont disposés coaxialement à un deuxième arbre de sortie (32).

12. Chaîne cinématique hybride selon l'une quelconque des revendications 1 à 11, **caractérisée en ce que** des pignons fixes (66, 72) de deux rapports de vitesse de marche avant immédiatement contigus (3 ; 4) sont immobilisés sur le deuxième arbre d'entrée (26).

13. Chaîne cinématique hybride selon l'une quelconque des revendications 1 à 12, **caractérisée en ce que** sur un deuxième arbre de sortie (32), des pignons fous (62, 74 ; 64', 62') associés à deux rapports de vitesse de marche avant différents sont montés rotatifs et peuvent être reliés alternativement au deuxième arbre de sortie (32) au moyen d'un pack d'embrayage (B1, B2) interposé, ou qui peuvent être reliés au deuxième arbre de sortie (32) au moyen d'embrayages (B2, D2) pouvant être actionnés indépendamment l'un de l'autre.
